# EUROPÄISCHE PATENTSCHRIFT

(11) **EP 1 404 247 B1**
(45) Veröffentlichungstag und Bekanntmachung des Hinweises auf die Patenterteilung: **15.07.2009**
(21) Anmeldenummer: 02732756.8
(22) Anmeldetag: 18.06.2002
(51) Int. Cl.: A61C 8/00, A61C 7/00, A61C 7/28

(54) **KIEFERORTHOPÄDISCHES IMPLANTATSYSTEM ZUR ZAHNMOBILISIERUNG**
MANDIBULAR ORTHOPEDIC IMPLANT SYSTEM FOR MOBILIZING TEETH
SYSTEME D'IMPLANT ORTHODONTIQUE DE MOBILISATION DENTAIRE

(30) Priorität: 05.07.2001 DE 10132088
(43) Veröffentlichungstag der Anmeldung: 07.04.2004
(73) Patentinhaber: Camlog Biotechnologies AG, 4053 Basel (CH)
(72) Erfinder: BUMANN, Axel, 10115 Berlin (DE); SCHERBERGER, Rolf, 75417 Mühlacker (DE)
(74) Vertreter: Müller, Christoph Emanuel
(86) Internationale Anmeldenummer: PCT/EP2002/006680
(87) Internationale Veröffentlichungsnummer: WO 2003/009770

(56) Entgegenhaltungen:
- EP-A- 0 988 836
- WO-A-01/37752
- WO-A-02/03880
- US-A- 5 160 260
- US-A- 5 820 368
- US-A- 5 938 435

## Beschreibung

Die Erfindung betrifft ein kieferorthopädisches Implantatsystem zur Zahnmobilisierung, mit einem Implantat, das einen in einen Kieferknochen implantierbaren Schaft und einen sich an den Schaft anschließenden Kopf aufweist, an dem Befestigungsmittel vorhanden sind, um zumindest ein längliches Spann- oder Halteelement an dem Kopf zu-fixieren, wobei die Befestigungsmittel zumindest eine am Kopf ausgebildete, sich im wesentlichen quer oder schräg zu einer Längsachse des Schafts erstreckende und an zumindest einem Längsende offene längliche Ausnehmung zur Aufnahme eines Abschnitts des zumindest einen Spann- und Halteelements aufweisen.

Ein derartiges Implantatsystem ist aus dem Artikel "Widening the orthodontic possibilities with the Aarhus anchorage®", Autorin Birte Melsen, erschienen im "The Periodontology and oral Implantology Journal", Band 19 N° Hors Serie/2000 bekannt.

Ein solches Implantatsystem wird in der Kieferorthopädie zur Korrektur von Zahnfehlstellungen verwendet. Derartige Fehlstellungen können beispielsweise in zu großen Zahnabständen zwischen benachbarten Zähnen, in zu eng beieinander stehenden Zähnen, oder in Schief- oder um die Zahnachse verdrehten Stellungen bestehen. Zahnfehlstellungen lassen sich insbesondere bei Kindern und Jugendlichen beheben, indem eine Zug- oder Schubkraft oder ein Drehmoment auf den oder die zu korrigierenden Zähne über einen längeren Zeitraum ausgeübt wird, um sie allmählich in die richtige Stellung zu bewegen.

Als Spann- oder Halteelement werden dabei üblicherweise Drähte, Gummiringe, Kunststoffketten, Metallschraubenfedern und dergleichen verwendet.

In früheren Verfahren wurde das zumindest eine Spann- oder Halteelement mittels eines Brackets an einem oder mehreren nicht zu korrigierenden Zähnen als Verankerungspunkt fixiert, und das zumindest eine Spann- oder Halteelement wurde mit seinem anderen Ende an dem zu mobilisierenden Zahn befestigt. Bei diesen ursprünglichen Verfahren besteht jedoch der Nachteil, daß der oder die Zähne, die als Verankerungsstellen für das zumindest eine Spann- oder Halteelement dienen, aufgrund des Prinzips von Actio und Reactio selbst mobilisiert werden. Dadurch ist die Korrektur der Zahnfehlstellung bei dieser Vorgehensweise mitunter nicht einfach zu kontrollieren.

Dieses Problem wurde durch die Bereitstellung eines kieferorthopädischen Implantats der eingangs genannten Art behoben, indem ein solches Implantat als immobiler Verankerungspunkt für das zumindest eine Spann- oder Halteelement dient. Das Implantat wird nicht an einem anderen Zahn befestigt, sondern unmittelbar im Kieferknochen, üblicherweise auf Höhe der Zahnwurzeln zwischen den Zähnen.

Das Implantat weist einen Schaft auf, der in den Kieferknochen implantierbar ist, und an den Kopf schließt sich ein Schaft an, an dem Befestigungsmittel vorhanden sind, um das zumindest eine Spann- oder Halteelement an dem Kopf und damit an dem Implantat zu fixieren. Dadurch wird ein ortsfester unbeweglicher Verankerungspunkt für das zumindest eine Spann- oder Halteelement geschaffen, und nur der oder die Zähne, die mobilisiert werden sollen, werden durch die unmittelbare oder mittelbare Kraftausübung des zumindest einen Spann- oder Halteelements tatsächlich in die gewünschte Stellung bewegt.

Bei dem aus dem eingangs genannten Aufsatz bekannten Implantatsystem weisen die Befestigungsmittel zwei am freien Ende des Kopfes ausgesparte einander kreuzende Schlitze auf, wobei in zumindest einem der Schlitze das zumindest eine Spann- oder Halteelement eingelegt werden kann. Zur Befestigung des zumindest einen Spann- oder Halteelements in dem zumindest einen Schlitz wird eine Drahtligatur verwendet, d.h. das Spann- oder Halteelement wird mittels eines dünnen Stahldrahtes an dem Kopf des Implantats befestigt. Hieran ist als nachteilig anzusehen, daß die Befestigung des zumindest einen Spann- oder Halte-elements an dem Implantat im Hinblick auf die Miniaturisierung derartiger Implantate für den behandelnden Arzt schwer zu handhaben ist. Außerdem entsteht im implantierten Zustand des Implantatsystems keine glatte Oberfläche im Bereich des Kopfes des Implantats, was vom Patienten bei Berührung mit der Zunge als unangenehm empfunden werden kann.

Eine damit vergleichbare Verankerungsschraube ist aus der WO 01/37752 A1 bekannt, die ebenfalls zur Zahnmobilisierung verwendet wird. Diese bekannte Verankerungsschraube weist einen Kopf auf, an dem eine Umfangsnut ausgebildet ist, in die ein Spanndraht eingelegt und um den Umfang der Nut gewunden werden kann. Zur weiteren Fixierung sind noch zwei gekreuzte durchgehende Bohrungen im Schraubenkopf vorhanden, in die der Spanndraht zur Fixierung zusätzlich eingesteckt werden kann.

Aus der EP-A-0 823 244 ist weiterhin ein Implantat bekannt, das als Befestigungsmittel zum Fixieren des zumindest einen Spann- oder Halteelements einen Haken oder eine Öse aufweist, die seitlich von dem Kopf des Implantats absteht. Dadurch weist dieses bekannte Implantat jedoch den Nachteil auf, daß der Herstellungsaufwand zur Ausbildung des seitlich von dem Kopf aufstehenden Hakens oder der Öse sehr hoch ist, insbesondere wenn man bedenkt, daß derartige Implantate miniaturisiert sind. Die seitlich von dem Kopf abstehende Öse bzw. der Haken kann darüber hinaus durch Hebelwirkung, die beispielsweise auch durch das zumindest eine Spann- oder Halteelement verursacht wird, leicht abbrechen, aufbrechen oder verbiegen. Darüber hinaus kann beim Patienten aufgrund des seitlich abstehenden Hakens oder der seitlich abstehenden Öse ein unangenehmes Fremdkörpergefühl bei der Berührung mit der Zunge entstehen.

Die Ausbildung eines seitlich von dem Kopf abstehenden Hakens oder der abstehenden Öse ist fertigungstechnisch nachteilig, weil der Kopf aufgrund des Hakens bzw. der Öse keine Rotationssymmetrie besitzt. Dementsprechend wird in dem genannten Dokument in bevorzugter Ausgestaltung vorgeschlagen, das Implantat mehrteilig aufzubauen, d.h. den Kopf und den Schaft als getrennte Teile herzustellen, und diese dann bei der Implantation mittels einer Schraube miteinander zu verbinden. Insgesamt ist das bekannte Implantat also dreiteilig aufgebaut. Durch die Mehrteiligkeit ist jedoch auch die Implantation dieses bekannten Implantats für den behandelnden Arzt in der Handhabung sehr schwierig, insbesondere vor dem Hintergrund der miniaturisierten Ausgestaltung eines derartigen Implantats. Es wird dort zwar auch als möglich angesehen, das gesamte Implantat einstückig herzustellen, jedoch erweist sich dieses aus den zuvor genannten Gründen als schwierig.

Aus der WO 02/03880 A1 ist ein Implantatsystem mit einem Implantat und Spann- oder Haltelementen in Form von Drähten bekannt. Das Implantat weist einen geschlitzten Kopf auf, wobei im Schlitz genau ein Drahtteil eingelegt ist.

Der vorliegenden Erfindung liegt daher die Aufgabe zugrunde, ein kieferorthopädisches Implantatsystem der eingangs genannten Art bereitzustellen, bei der die vorstehend genannten Nachteile vermieden werden, bei der insbesondere der Aufwand bei der Befestigung des zumindest einen Spann- oder Halteelements am Implantat verringert ist, und das vom Patienten als weniger störend empfunden wird.

Erfindungsgemäß wird diese Aufgabe hinsichtlich des eingangs genannten Implantatsystems dadurch gelöst, daß eine aushärtende oder aushärtbare Klebemasse zur Fixierung des Abschnitts des zumindest einen Spann- oder Halteelements in der zunächst einen Ausnehmung vorgesehen ist.

Das erfindungsgemäße Implantatsystem unterscheidet sich von dem bekannten System dadurch, daß das zumindest eine Spann- oder Halteelement in der zumindest einen Ausnehmung mittels einer aushärtenden oder aushärtbaren Klebmasse, beispielsweise eines Kunststoffes, fixiert wird, wodurch das erfindungsgemäße Implantatsystem den Vorteil hat, daß sich für den behandelnden Arzt die Fixierung des zumindest einen Spann- oder Halteelements als besonders einfach erweist. Der weitere Vorteil besteht darin, daß die Klebmasse eine glatte Kappe auf dem Kopf des Implantats bildet, die sich für den Patienten bei Berührung mit der Zunge nicht unangenehm anfühlt. Vielmehr fühlt sich eine derartiger Klebstoffüberzug im wesentlichen nicht anders an als Zahnfleisch oder Mundschleimhaut, wodurch das erfindungsgemäße Implantat bei dem Patienten eine höhere Akzeptanz erfährt als das bekannte Implantat.

Die zumindest eine Ausnehmung ist als am freien Ende des Kopfes ausgesparter Schlitz ausgebildet.

Hierbei ist von vorteil, daß das Einlegen des zumindest einen Spann- oder Halteelements in den Schlitz für den behandelnden Arzt sehr leicht zu handhaben ist, da das zumindest eine Spann- oder Halteelement" beispielsweise ein Draht, vom freien Ende des Knopfes her in den Schlitz eingelegt werden kann. Vorzugsweise ist der Schlitz an seinen beiden Längsenden offen, wodurch das Einlegen des Spann- oder Halteelements weiter vereinfacht ist.

Weiter ist die Tiefe des Schlitzes so bemessen, daß zumindest zwei Spann- oder Halteelemente übereinander in dem Schlitz aufgenommen werden können.

Durch die vergrößerte Tiefe des Schlitzes wird nicht nur der Vorteil erreicht, daß das zumindest eine Spann- oder Halteelement nach Aufbringen der Klebmasse sehr sicher in dem Schlitz befestigt werden kann, sondern daß auch mit nur einem Implantat zugleich zumindest zwei Spann- oder Halteelemente an demselben Implantat verankert werden können, die beispielsweise dann an unterschiedlichen Zähnen fixiert werden können.

In einer weiteren bevorzugten Ausgestaltung weisen die Befestigungsmittel zumindest zwei Ausnehmungen auf.

Auch hierdurch wird der Vorteil erzielt, daß zumindest zwei Spann- oder Halteelemente, bei entsprechender Tiefe oder Durchmesser der zumindest zwei Ausnehmungen auch mehr als zwei Spann- oder Halteelemente an dem Kopf des Implantats befestigt werden können. Dadurch kann eine sehr stabile Verankerung des Angriffspunkts der Kraft, die für die Mobilisierung des zu mobilisierenden Zahnes oder der zu mobilisierenden Zähne aufgebracht wird, erreicht werden.

Dabei ist es bevorzugt, wenn die Ausnehmungen über Kreuz, vorzugsweise rechtwinklig zueinander, verlaufen.

Auf diese Weise können zumindest zwei Spann- oder Halteelemente vorteilhafterweise in verschiedenen Richtungen von dem Implantat wegführen, um sich dann zu unterschiedlichen Zähnen hin zu erstrecken.

In einer weiter bevorzugten Ausgestaltung weist das freie Ende des Kopfes einen Konus auf, der sich zum freien Ende des Kopfes hin verjüngt, wobei die zumindest eine Ausnehmung in dem Konus ausgebildet ist.

Diese Maßnahme hat den Vorteil, daß die Klebmasse, die vor dem Aushärten vorzugsweise in plastischer Form vorliegt und auf das freie Ende des Kopfes aufgedrückt wird, nachdem das zumindest eine Spann- oder Halteelement in die zumindest eine Ausnehmung eingelegt wurde, einen besonders guten Halt auf dem Kopf nach dem Aushärten erfährt.

Dabei ist es weiterhin bevorzugt, wenn sich an ein dem verjüngenden Ende gegenüberliegendes Ende des Konus eine radial nach innen gerichtete Hinterschneidung anschließt.

Diese Hinterschneidung hat den Vorteil, daß die Klebmasse beim Aufbringen auf den Kopf in die Hinterschneidung eindringt und dadurch einen noch besseren mechanischen Halt an dem Kopf nach dem Aushärten erfährt. Des weiteren wird das zumindest eine Spann- oder Halteelement dann im Bereich der Hinterschneidung von der Klebmasse vollständig umgriffen und dadurch noch sicherer an dem Kopf des Implantats fixiert.

In einer weiteren bevorzugten Ausgestaltung weist der Schaft ein Gewinde zum Eindrehen in den Kieferknochen auf, und ist an dem Kopf umfänglich ein Außenmehrkant zum Ansetzen eines entsprechenden Werkzeuges ausgebildet.

Hierbei ist von Vorteil, daß sich das Implantat selbstschneidend in den Kieferknochen eindrehen läßt, wobei sich das Implantat durch den Außenmehrkant am Kopf, der sich vorzugsweise an die zuvor genannte Hinterschneidung anschließt, mittels eines entsprechenden Werkzeuges, beispielsweise eines miniaturisierten Maulschlüssels, in leicht zu handhabender Weise in den Kieferknochen implantieren läßt.

In einer weiteren bevorzugten Ausgestaltung sind der Schaft und der Kopf zusammen einstückig ausgebildet.

Die einstückige Ausgestaltung des Implantats hat den Vorteil, daß trotz Miniaturisierung des Implantats die Implantation für den behandelnden Arzt sehr einfach ist, weil nicht mehrere Teile zusammengefügt werden müssen.

In einer weiteren bevorzugten Ausgestaltung sind der Kopf und der Schaft aus einem stangenförmigen Vollmaterial in einem materialabtragenden Verfahren gefertigt.

Diese Art der Fertigung des erfindungsgemäßen Implantats hat den Vorteil, daß das Implantat aufgrund der Fertigung aus einem Vollmaterial auch bei einer Miniaturisierung eine hohe Stabilität besitzt, weil keine Löt- oder Schweißverbindungen vorhanden sind, und sich darüber hinaus für eine maschinelle Fertigung in Serienproduktion mit hohen Stückzahlen in kurzer Zeit fertigen läßt. Als Material kann beispielsweise eine Titan-Legierung verwendet werden.

In einer weiteren bevorzugten Ausgestaltung liegt die Klebmasse vor dem Aufbringen auf den Kopf in plastischer Form vor und ist nach dem Aufbringen vorzugsweise mittels Licht aushärtbar.

Durch diese Maßnahme wird die Handhabung der Implantatsystem zum Fixieren des zumindest einen Spann- oder Halteelements an dem Kopf des Implantats vereinfacht, da sich die plastische Klebmasse in der Art von Knete auf den Kopf des Implantats leicht aufdrücken läßt und dabei bereits eine Vorfixierung erfährt, ohne wegzufließen oder vom Kopf des Implantats wieder abzufallen. Die vollständige Fixierung des zumindest einen Spann- oder Halteelements erfolgt dann durch Aushärten der Klebmasse, vorzugsweise mit Licht, auf dem Kopf des Implantats.

Weitere Vorteile ergeben sich aus der nachfolgenden Beschreibung und der beigefügten Zeichnung.

Ausführungsbeispiele der Erfindung sind in der Zeichnung dargestellt und werden mit Bezug auf diese hiernach näher beschrieben. Es zeigen:
- Fig. 1: ein Implantat des erfindungsgemäßen Implantatsystems in stark vergrößertem Maßstab in Seitenansicht in Alleinstellung;
- Fig. 2: ein erfindungsgemäßes Implantatsystem mit dem Implantat in Fig. 1 und mit auf dem Kopf des Implantats nach Einlegen eines Spann- oder Halteelements aufgebrachter Klebmasse;
- Fig. 3: eine Draufsicht auf das Implantat in Fig. 1;
- Fig. 4: eine weitere perspektivische Ansicht des Implantats in Fig. 1; und
- Figuren 5: bis 7 schematische Darstellungen einiger Beispiele für die Applikation des erfindungsgemäßen Implantatsystems.

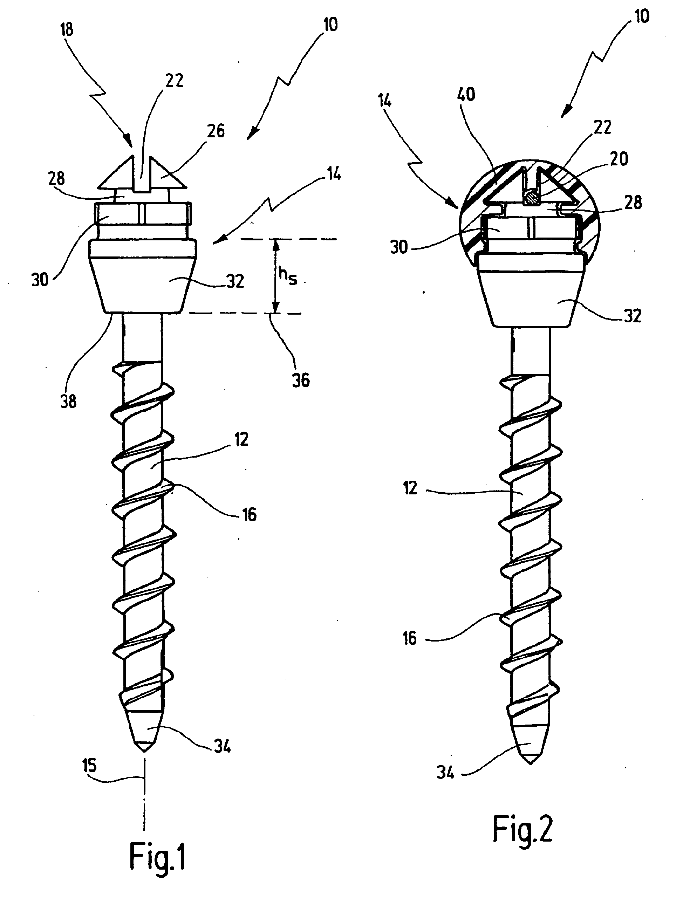

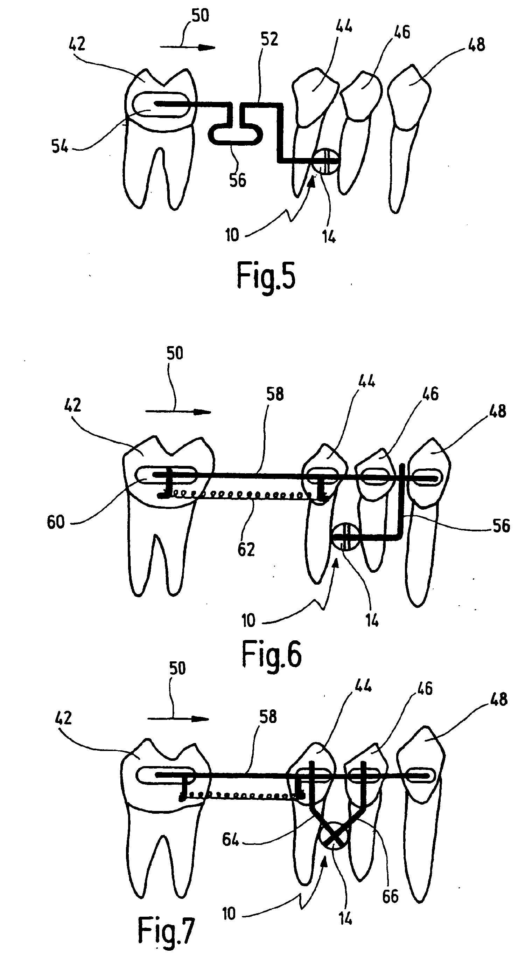

In Figuren 1 bis 4 ist ein mit dem allgemeinen Bezugszeichen 10 versehenes kieferorthopädisches Implantat zur Zahnmobilisierung dargestellt. Das Implantat 10 wird im Rahmen der Kieferorthopädie zur Korrektur von Zahnfehlstellungen verwendet, wie später noch mit Bezug auf Figuren 5 bis 7 näher beschrieben wird.

Das Implantat 10 weist einen in einen nicht dargestellten Kieferknochen implantierbaren Schaft 12 auf. An den Schaft 12 schließt sich ein Kopf 14 an, der im vorliegenden Fall einstükkig mit dem Schaft 12 verbunden ist.

Das Implantat 10 ist insgesamt rotationssymmetrisch um seine Längsachse 15 ausgebildet, die die Längsmittel- oder Symmetrieachse des Implantats 10 bildet.

Der Schaft 12 weist ein Gewinde 16 auf, so daß das Implantat 10 in den Kieferknochen eingedreht werden kann.

Der Kopf 14 weist mit dem allgemeinen Bezugszeichen 18 versehene Befestigungsmittel auf, um zumindest ein (in Fig. 2 dargestelltes Spann- oder Halteelement 20) an dem Kopf 14 zu fixieren, wobei das Spann- oder Halteelement 20 bspw. ein Draht, eine Feder, eine Kette oder ein Gummibändchen ist.

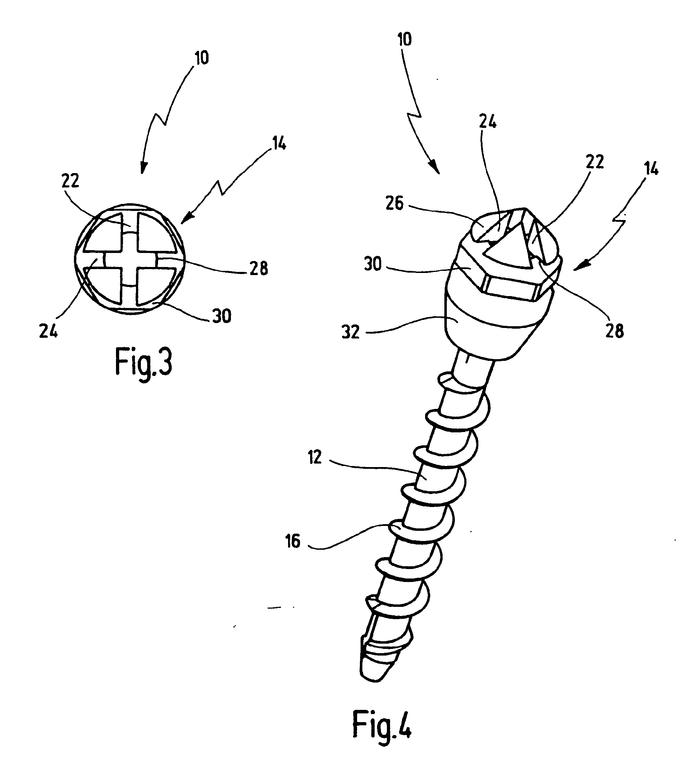

Die Befestigungsmittel 18 weisen zumindest eine, im gezeigten Ausführungsbeispiel zwei am Kopf 14 ausgebildete längliche Ausnehmungen 22 und 24 auf, wie in der Draufsicht in Fig. 3 am besten zu erkennen ist. Die Ausnehmungen 22 und 24 sind als am freien Ende des Kopfes 14 ausgesparte Schlitze ausgebildet, die sich quer zur Längsachse 15 des Schafts 12 erstrecken und an zumindest einem ihrer Längsenden, in dem gezeigten Ausführungsbeispiel an ihren jeweils beiden Längsenden offen sind.

Die beiden Ausnehmungen 22 und 24 in Form der Schlitze sind in einem am freien Ende des Kopfes 14 angeordneten Konus 26 ausgespart, der sich zum freien Ende des Kopfes 14 hin verjüngt.

Die beiden in dem Konus 26 ausgebildeten Ausnehmungen 22 und 24 verlaufen etwa rechtwinklig zueinander.

An dem dem freien Ende des Kopfes 14 gegenüberliegenden Ende weist der Kopf 14 eine Hinterschneidung 28 auf, die sich unmittelbar an das aufgeweitete Ende des Konus 26 anschließt und radial nach innen gerichtet ist.

Wie insbesondere aus Figuren 1 und 2 hervorgeht, erstreckt sich die Ausnehmung 22 und erstreckt sich auch die Ausnehmung 24 über die gesamte Höhe des Konus 26 und erstreckt sich dabei auch bis in einen Teilbereich der Hinterschneidung 28.

Die Tiefe der Ausnehmungen 22 und 24 ist jedenfalls so gewählt, daß ihre Tiefe größer ist als ihr Durchmesser, so daß in jeder der Ausnehmungen 22 und 24 zumindest zwei Spann- oder Halteelemente 20 bspw. zwei Drähte übereinander aufgenommen werden können.

An die Hinterschneidung 28 schließt sich des weiteren ein Außenmehrkant 30 an, im gezeigten Ausführungsbeispiel ein Außensechskant, zum Ansetzen eines entsprechenden Werkzeuges, beispielsweise eines Maulschlüssels. Des weiteren weist der Kopf 14 einen Sockelabschnitt 32 auf, von dem sich der Schaft 12 weg erstreckt.

Das Implantat 10 ist insgesamt miniaturisiert ausgebildet. Die Länge des Schafts 12 beträgt beispielsweise etwa 10 bis 15 mm, und zwar von der Spitze 34 bis zu einer Linie 36 gemessen, die den Übergang vom Schaft 12 zu dem Sockelabschnitt 32 des Kopfes 14 darstellt. Beim Implantieren wird der Schaft 12 bis etwa zur Linie 36 in den Kieferknochen eingedreht, wozu ein an den Außenmehrkant 30 angesetztes Werkzeug benutzt wird. Eine Unterseite 38 des Sockelabschnitts 32 verhindert ein zu tiefes Eindrehen des Implantats 10 in den Kieferknochen, da die Unterseite 38 eine Stopfläche bzw. einen Anschlag beim Eindrehen bildet. Eine Höhe hₛ des Sockelabschnitts 32 ist etwa so bemessen, daß sie der Dicke des Zahnfleisches (Gingiva) entspricht. In praktischen Fällen beträgt die Höhe hₛ etwa 1,5 bis 2,5 mm. Im implantierten Zustand ragen somit lediglich der Konus 26 und der Außenmehrkant 30 aus dem Zahnfleisch vor. Der aus dem Zahnfleisch vorragende Teil des Kopfes 14 weist eine Bauhöhe von etwa 0,8 bis 1,3 mm auf. Auf diese Weise wird das Implantat von dem Patienten so gut wie nicht als Fremdkörper empfunden.

Das gesamte Implantat 10 ist, wie bereits erwähnt, einstückig ausgebildet und wird beispielsweise aus einer Titanlegierung aus einem stangenförmigen Vollmaterial durch ein Materialabtragungsverfahren gefertigt, beispielsweise durch ein Drehverfahren, was aufgrund der hohen Rotationssymmetrie des erfindungsgemäßen Implantats 10 vorteilhafterweise mit geringem Aufwand möglich ist.

In Fig. 2 ist das Implantat 10 mit dem in der Ausnehmung 22 aufgenommenen Spann- oder Halteelement 20 dargestellt, wobei das drahtförmige Element 20 mittels einer aushärtenden oder aushärtbaren Klebmasse 40, beispielsweise einem lichtaushärtbaren Kunststoff, fixiert ist. Die Klebmasse 40 wird im plastischen Zustand nach der Implantation des Implantats 10 in den Kieferknochen und nach Einlegen des zumindest einen Spann- oder Halteelements 20 in die Ausnehmung 22 auf den Kopf 14 des Implantats 10 gedrückt, wobei einerseits der Konus 26 eine Vorfixierung der Klebmasse 40 bewirkt, und wobei die Klebmasse 40 beim Aufdrücken auch in die Hinterschneidung 28 dringt und damit das Spann- und Halteelement 20 allseitig umfaßt. Die Klebmasse 40 überdeckt dabei auch den Außensechskant 30. Nach dem Aufbringen der Klebmasse 40 auf den Kopf 14 wird sie mittels Licht, beispielsweise UV-Licht, ausgehärtet.

Die Klebmasse 40 bildet des weiteren im ausgehärteten Zustand eine glatte Abdeckkappe für den Kopfes 14 des Implantats, die vom Patienten bei der Berührung mit der Zunge nicht als Fremdkörper empfunden wird, da sie bei der Berührung mit der Zunge kaum ein anderes Gefühl vermittelt als wenn die Zunge Zahnfleisch berührt. Dies wird durch die geringe Bauhöhe des aus dem Zahnfleisch vorragenden Teils des Kopfes 14 des Implantats 10 noch weiter begünstigt.

In Figuren 5 bis 7 sind drei beispielhafte Applikationsmöglichkeiten des Implantats 10 aus Figuren 1 bis 4 schematisch dargestellt.

In Figuren 5 bis 7 sind vier Zähne des Unterkiefers dargestellt, die mit den Bezugszeichen 42 (Backenzahn) und 44, 46 und 48 (Eck- und Schneidezähne) bezeichnet sind. Im Rahmen einer kieferorthopädischen Behandlung soll der Zahn 42 mobilisiert werden, um den großen Lückenabstand zwischen dem Zahn 42 und dem Zahn 44 zu verkleinern, ohne daß dabei der Zahn 44 oder 46 oder 48 mobilisiert werden. Die Richtung der Mobilisierung ist in Figuren 5 bis 7 mit einem Pfeil 50 veranschaulicht.

In Figuren 5 bis 7 ist das Implantat 10 im in den nicht dargestellten Unterkieferknochen implantierten Zustand dargestellt, und zwar wurde das Implantat 10 zwischen die Wurzeln der Zähne 44 und 46 in den Unterkieferknochen eingeschraubt. Entsprechend ist das Implantat 10 aufgrund seiner Implantation in Richtung quer zur Längsrichtung der Wurzeln der Zähne 44 und 46 in Draufsicht auf den Kopf 14 zu sehen. Die Klebmasse 40 aus Fig. 2 wurde dabei zeichnerisch weggelassen.

Gemäß Fig. 5 ist an dem Kopf 14 des Implantats 10 ein Ende eines Spann- oder Halteelements 52 befestigt, dessen anderes Ende über ein üblicherweise in der Kieferorthopädie verwendeten Brackets 54 direkt an dem zu mobilisierenden Zahn 42 befestigt ist. Das Spannelement 52 weist einen Federabschnitt 56 auf, der bewirkt, daß auf den Zahn 42 eine Zugkraft in Richtung des Pfeiles 50 ausgeübt wird. Diese Zugkraft greift auch an dem implantierten Implantat 10 an, das jedoch unbeweglich ist, so, daß nur der Zahn 42 mobilisiert wird.

Gemäß Fig. 6 ist an dem implantierten Implantat 10 ein Spann- oder Halteelement 56 fixiert, das über eine Spange 58 indirekt mit dem zu mobilisierenden Zahn 42 verbunden ist, die an den Zähnen 44, 46 und 48 über entsprechende Brackets befestigt ist. Die Spange 58 ist über ein Bracket 60 auch mit dem Zahn 42 verbunden, jedoch ist das Bracket 60 relativ zu der Spange 58 verschiebbar. Eine schraubenfederartige Kette ist mit dem Bracket 60 einerseits und mit der Spange 58 am Zahn 44 verbunden und übt auf den Zahn 42 eine Zugkraft in Richtung des Pfeiles 50 aus. Eine Mobilisierung des Zahnes 44 und auch der Zähne 46 und 48 ist jedoch aufgrund deren Fixierung über das Spann- oder Halteelement 56 an dem Implantat 10 ausgeschlossen, so daß gewährleistet ist, daß nur der Zahn 42 wie gewünscht mobilisiert wird.

Vergleichbar mit Fig. 6 ist die Anordnung in Fig. 7, wobei hier zur Bildung eines unbeweglichen Verankerungspunktes für die Mobilisierungskraft die Spange 58 mittels zwei Spann- oder Halteelementen 64 und 66 am Implantat 10 fixiert ist.

Es versteht sich, daß das Implantat 10 je nach Fall sowohl auf der der Zunge zugewandten Innenseite der Kieferknochen als auch auf der der Zunge abgewandten Außenseite der Kieferknochen implantiert werden kann, und zwar an einer Stelle, die für den Zweck der gezielten Zahnmobilisierung am geeignetsten ist.

Je nach Fall, insbesondere nach Höhe der aufzubringenden Mobilisierungskraft, die auch in einer Schubkraft oder einer einen Zahn um seine Längsachse verdrehenden Kraft bestehen kann, können entsprechende Anordnungen von Zug-, Schub- oder Torsionselementen mit dem einen Implantat 10 oder mehreren derartigen Implantaten 10 verwendet werden, um das gewünschte Resultat der Behebung der Zahnfehlstellung zu erreichen.

## Patentansprüche

1. Kieferorthopädisches Implantatsystem zur Zahnmobilisierung, mit einem Implantat, das einen in einen Kieferknochen implantierbaren Schaft (12) und einen sich an den Schaft (12) anschließenden Kopf (14) aufweist, und mit mindestens einem länglichen Spann- oder Halteelement (20; 52; 56; 64, 66), wobei am Implantat Befestigungsmittel (18) vorhanden sind, um das zumindest eine Spann- oder Halteelement (20; 52; 56; 64, 66) an dem Kopf (14) zu fixieren, wobei die Befestigungsmittel (18) zumindest eine am Kopf (14) ausgebildete, sich im wesentlichen quer oder schräg zu einer Längsachse (15) des Schafts erstreckende und an zumindest einem Längsende offene längliche Ausnehmung (22, 24) zur Aufnahme eines Abschnitts des zumindest einen Spann- oder Halteelements (20; 52; 56; 64, 66) aufweisen, wobei die zumindest eine Ausnehmung (22, 24) als am freien Ende des Kopfes (14) ausgesparter Schlitz ausgebildet ist, **gekennzeichnet durch** eine aushärtende oder aushärtbare Klebmasse (40) zur Fixierung des Abschnitts des zumindest einen Spann- oder Halteelements (20; 52; 56; 64, 66) in der zumindest einen Ausnehmung (22, 24) und **dadurch**, dass die Tiefe des Schlitzes so bemessen ist, daß zumindest zwei der Spann- oder Halteelemente (20; 52; 56; 64, 66) übereinander in dem Schlitz aufgenommen werden können.

2. Implantatsystem nach Anspruch 1, **dadurch gekennzeichnet, daß** die Befestigungsmittel (18) zumindest zwei Ausnehmungen (22, 24) aufweisen.

3. Implantatsystem nach Anspruch 2, **dadurch gekennzeichnet, daß** die Ausnehmungen (22, 24) über Kreuz, vorzugsweise rechtwinklig zueinander, verlaufen.

4. Implantatsystem nach einem der Ansprüche 1 bis 3, **dadurch gekennzeichnet, daß** das freie Ende des Kopfes (14) einen Konus (26) aufweist, der sich zum freien Ende des Kopfes (14) hin verjüngt, wobei die zumindest eine Ausnehmung (22, 24) in dem Konus (26) ausgebildet ist.

5. Implantatsystem nach Anspruch 4, **dadurch gekennzeichnet, daß** sich an ein dem verjüngten Ende gegenüberliegendes Ende des Konus (26) eine radial nach innen gerichtete Hinterschneidung (28) anschließt.

6. Implantatsystem nach einem der Ansprüche 1 bis 5, **dadurch gekennzeichnet, daß** der Schaft (12) ein Gewinde (16) zum Eindrehen in den Kieferknochen aufweist, und daß an dem Kopf (14) umfänglich ein Außenmehrkant (30) zum Ansetzen eines entsprechenden Werkzeuges ausgebildet ist.

7. Implantatsystem nach einem der Ansprüche 1 bis 6, **dadurch gekennzeichnet, daß** der Schaft (12) und der Kopf (14) zusammen einstückig ausgebildet sind.

8. Implantat nach einem der Ansprüche 1 bis 7, **dadurch gekennzeichnet, daß** der Kopf (14) und der Schaft (12) aus einem stangenförmigen Vollmaterial in einem materialabtragenden Verfahren gefertigt sind.

9. Implantatsystem nach einem der Ansprüche 1 bis 8, **dadurch gekennzeichnet, daß** die Klebmasse (40) vor dem Aufbringen auf den Kopf (14) in plastischer Form vorliegt und nach dem Aufbringen vorzugsweise mittels Licht aushärtbar ist.

## Claims

1. Orthodontic implant system for tooth mobilization, having an implant which has a shaft (12) which can be implanted in a jawbone and a head (14) which is attached to the shaft (12), and having at least one elongate tensioning or retaining element (20; 52; 56; 64; 66), with fastening means (18) being present on the implant and in order to fix the at least one tensioning or retaining element (20; 52; 56; 64, 66) on the head (14), where the fastening means (18) have at least one elongate recess (22, 24) which is formed on the head (14), extends substantially perpendicularly or obliquely to a long axis (15) of the shaft and is open on at least one axial end to receive a section of the at least one tensioning or retaining element (20; 52; 56; 64, 66), the at least one recess (22, 24) being formed as slit recessed at the free end of the head (14), **characterized by** a curing or curable adhesive composition (40) for fixation of the section of the at least one tensioning or retaining element (20; 52; 56; 64, 66) in the at least one recess (22,24) and
**characterized in that** the depth of the slit is such that the slit can receive at least two of the tensioning or retaining elements (20; 52; 56; 64, 66) one above the other.

2. Implant system according to Claim 1, **characterized in that** the fastening means (18) have at least two recesses (22, 24).

3. Implant system according to Claim 2, **characterized in that** the recesses (22, 24) cross one another, preferably at right angles.

4. Implant system according to any of Claims 1 to 3, **characterized in that** the free end of the head (14) has a coning (26) which tapers toward the free end of the head (14), with the at least one recess (22, 24) being formed in the coning (26).

5. Implant system according to Claim 4, **characterized in that** a radially inwardly directed undercut (28) is connected at an end of the coning (26) opposite to the tapered end.

6. Implant system according to any of Claims 1 to 5, **characterized in that** the shaft (12) has a thread (16) for screwing into the jawbone, and **in that** a polygon cap (30) is formed around the head (14) to fit a corresponding tool.

7. Implant system according to any of Claims 1 to 6, **characterized in that** the shaft (12) and the head (14) are formed together in one piece.

8. Implant according to any of Claims 1 to 7,
**characterized in that** the head (14) and the shaft (12) are fabricated from a rod-like solid material in a material-removing process.

9. Implant system according to any of Claims 1 to 8, **characterized in that** the adhesive composition (40) is in plastic form before application to the head (14) and can be cured after application preferably by means of light.

## Revendications

1. Système d'implant orthodontique pour l'immobilisation des dents à l'aide d'un implant, qui comprend une tige (12), implantable dans un os maxillaire, et la tige (12) se terminant par une tête (14), et comportant au moins un élément oblong de serrage et de maintien (20 ; 52 ; 56 ; 64, 66), des moyens de fixation (18) étant présents sur l'implant, pour fixer l'au moins un élément de serrage et de maintien (20 ; 52 ; 56 ; 64, 66) contre la tête (14), les moyens de fixation (18) présentant au moins un évidement (22, 24), oblong, configuré au niveau de la tête (14), s'étendant pour l'essentiel transversalement ou obliquement par rapport à un axe longitudinal (15) de la tige, et ouvert au moins à une extrémité longitudinale, évidement destiné à loger un segment de l'au moins un élément de serrage et de maintien (20 ; 52 ; 56 ; 64, 66), l'au moins un évidement (22, 24) étant configuré comme une rainure évidée au niveau de l'extrémité libre de la tête (14), **caractérisé par** une masse adhésive (40), durcie ou durcissable, pour la fixation du segment de l'au moins un élément de serrage ou de maintien (20 ; 52 ; 56 ; 64, 66) dans l'au moins un évidement (22, 24), et en ce que la profondeur de la rainure est dimensionnée de façon qu'au moins deux des éléments de serrage ou de maintien (20 ; 52 ; 56 ; 64, 66) puissent être logés l'un au-dessus de l'autre dans la rainure.

2. Système d'implant selon la revendication 1,
**caractérisé en ce que** les moyens de fixation (18) comportent au moins deux évidements (22, 24).

3. Système d'implant selon la revendication 2,
**caractérisé en ce que** les évidements (22, 24) forment une croix, de préférence à angle droit.

4. Système d'implant selon l'une des revendications 1 à 3, **caractérisé en ce que** l'extrémité libre de la tête (14) comprend un cône (26), qui s'effile vers l'extrémité libre de la tête (14), l'au moins un évidement (22, 24) étant alors réalisé dans le cône (26).

5. Système d'implant selon la revendication 4,
**caractérisé en ce qu'**une extrémité du cône (26),
opposée à l'extrémité effilée, se poursuit par une contre-dépouille (28) dirigée radialement vers l'intérieur.

6. Système d'implant selon l'une des revendications 1 à 5, **caractérisé en ce que** la tige (12) comporte un filetage (16) pour pénétration par vissage dans l'os maxillaire, et qu'un polygone extérieur mâle (30) est réalisé autour de la tête (14), pour fixation d'un outil correspondant.

7. Système d'implant selon l'une des revendications 1 à 6, **caractérisé en ce que** la tige (12) et la tête (14) sont réalisées en une seule pièce.

8. Implant selon l'une des revendications 1 à 7, **caractérisé en ce que** la tête (14) et la tige (12) sont usinées à partir d'un matériau plein, en forme de barre, dans le cadre d'un procédé par enlèvement de matière.

9. Système d'implant selon l'une des revendications 1 à 8, **caractérisé en ce que** la masse adhésive (40) se présente sous forme plastique avant application sur la tête (14), et, après application, peut subir un durcissement, de préférence à la lumière.
